# EUROPEAN PATENT APPLICATION

(11) **EP 0 916 475 A1**
(43) Date of publication of application: **19.05.1999**
(21) Application number: 98309244.6
(22) Date of filing: 11.11.1998
(51) Int. Cl.: B29C 59/04, B29D 31/00, B29C 47/88

(54) **Finishing roll sleeve for extruded thermoplastic film**

(30) Priority: 14.11.1997 US 65697 P; 20.03.1998 US 44890
(71) Applicant: GENERAL ELECTRIC COMPANY, Schenectady, NY 12345 (US)
(72) Inventor: Lilly, Kenneth Lee, Evansville, Indiana 47712 (US); Morrow, Robert James, Jr., Mount Vernon, Indiana 47620 (US); Blaylock, Gerald Dee, New Harmony, Indiana 47631 (US)
(74) Representative: Szary, Anne Catherine, Dr.

(57) **Abstract**

This invention relates to an improved finishing roll sleeve and method for extruding thermoplastic articles and, more particularly, relates to an improved method for providing smooth upper and lower surfaces to a thermoplastic substrate such that said substrate is particularly useful in optical media applications, such as CD-ROM cards. Such applications require the use of substrates having polished surfaces on both sides and a birefringence of less than twenty-five (25) nm. Further requirements for optical media applications include abrasion, chemical and UV resistance, substrate thickness consistency, thermal shrinkage and barrier resistance to water vapor.

## Description

This invention relates generally to an improved roll for use in extrusion processes, particularly the extrusion of thermoplastic sheet or film. More particularly, this invention relates to an improved finishing roll that may be used to extrude thermoplastic articles having a controlled texture. Most particularly, this invention relates to a finishing roll comprising an inner roll that is covered with an intermediate elastomeric layer and an outer thermoplastic sleeve that may be used to produce extruded thermoplastic sheet or film with low surface roughness and low optical birefringence suitable for a wide number of applications, including optical media applications.

### BACKGROUND OF THE INVENTION

Injection molded polycarbonate is widely used in optical media applications, such as CD-ROMs. The use of extruded polycarbonate films in certain optical media applications has been suggested, for example, in U.S. Patent Nos. 4,790,893, 4,836,874, 4,968,370, 5,466,319 and 5,579,296. These patents each generally suggest an apparatus and/or process which uses a continuous or semi-continuous sheet or film of polycarbonate to manufacture laminated optical media articles, such as CD-ROMs. These patents indicate that the optical properties of the polycarbonate are critical. In particular, the patents indicate that surface roughness and optical birefringence of the films should approximate the optical characteristic of injection molded optical media articles.

Extruded polycarbonate films generally have acceptable levels of clarity and strength for optical applications, but lack acceptable birefringence properties, abrasion resistance, chemical resistance and surface roughness. Optical birefringence is a measure of the difference in optical path length within thermoplastic materials. In polycarbonate, optical birefringence is known to be directly related to intrinsic stress within the material. Some optical media applications require a substrate that has a polished surface (i.e. low surface roughness) on both sides and a birefringence of less than 25 nm, preferably less than 10 nm. Other requirements for optical media applications include abrasion, chemical and ultraviolet (UV) resistance. Also, optical media applications require consistent substrate thickness, and the ability to die cut the cured article immediately after lamination. Furthermore, the substrate should be a barrier to water vapor.

Conventional extrusion equipment typically comprises an extruder, a slotted die, and a two-roll (i.e., opposing upper and lower rolls) stack of chrome plated finishing rolls to control the final thickness of the extruded film. Such equipment is known to produce polycarbonate having high levels of optical birefringence that are unacceptable for optical media applications.

U.S. Patent No. 5,242,742 (hereinafter the "'742 patent") describes a number of prior art methods for producing extruded thermoplastic films having reduced optical birefringence, and proposes a method for producing thermoplastic sheet or films wherein the optical birefringence path difference does not exceed 50 nm. The '742 patent also suggests that the method described therein can be used to control surface roughness or smoothness to less than 300 nm on one surface. However, some optical media applications have more restrictive requirements for both optical birefringence and surface roughness than those described in the '742 patent. Moreover, the method of extruding thermoplastic films described in the '742 patent is somewhat unpractical because it uses a smooth finished endless belt which is passed around the lower roll of a two-roll stack and guided over a planar cooling plate and a deflecting roll.

There have been previous attempts to modify the finishing rolls used to control the thickness of an extrudate. For example, U.S. Patent No. 3,756,760, discloses a polishing roll having a steel core, an elastomeric (rubber) layer, and an outer, thin, flexible layer of chrome plated nickel. When deviations in uniform thickness of the extruded product are encountered in the -first nip during operation, instead of tending to flatten the thick spots or skip over adjacent low spots, this flexible roll reportedly provides continuous contact. The primary problem with this configuration is that the outer metal layer is not durable, and is known to be subject to cracking.

Therefore, it is desirable to achieve lower values of surface roughness and optical birefringence in extruded thermoplastic materials than have previously been reported. It is also desirable to obtain such improved properties using conventional (e.g., standard two-roll stack) extrusion technology.

### SUMMARY OF THE INVENTION

According to present invention, there is provided an improved finishing roll comprising a rigid core, an elastomeric covering attached to the rigid core, and a thermoplastic sleeve that is placed over the elastomeric covering. The rigid core preferably comprises a silicone or other heat resistant elastomer. The elastomeric covering preferably comprises polytetrafluoroethylene (hereinafter "PTFE").

The present invention may be used in a conventional thermoplastic extrusion process to produce a thermoplastic film exhibiting a controlled texture or surface roughness and low optical birefringence. The textured films made using the roll described herein can also be coated with a curable coating to produce a low surface roughness, low birefringence thermoplastic film.

As described more fully below, a conventional slotted die extruder having a two-roll finishing stack comprising a top roll of the present invention was used to extrude textured films. This top roll had a PTFE outer layer with an average surface roughness (Rₐ) of 0.3 to 0.8 µm. The bottom roll was a standard chrome plated steel roll. Some uncoated, textured films produced using this apparatus had the following properties: an eighty-five degree (85°) gloss measured in accordance with ASTM D523; a haze of 90% to 100%, an Rₐ (average surface roughness) of 20-40 nm; and an optical birefringence path length difference of less than 10 nm. The uncoated, textured film produced using said apparatus may be smoothed by applying a curable coating to the textured surface to produce a film having an Rₐ of 3-10 nm.

### BRIEF DESCRIPTON OF THE DRAWINGS

Fig. 1 depicts a schematic illustration of a conventional apparatus for extruding thermoplastic materials, particularly illustrating the extruder, die, finishing stack (first nip) and second nip.

Fig. 2 depicts an enlarged sectional schematic illustration of a finishing stack as illustrated in Fig. 1.

Fig. 3 depicts a schematic cross-sectional illustration of the top roll illustrated in Figs. 1 and 2.

Fig. 4 depicts a schematic cross-sectional illustration of a second embodiment of a top roll illustrated in Figs. 1 and 2.

### DETAILED DESCRIPTION OF THE PREFERRED EMBODIMENTS

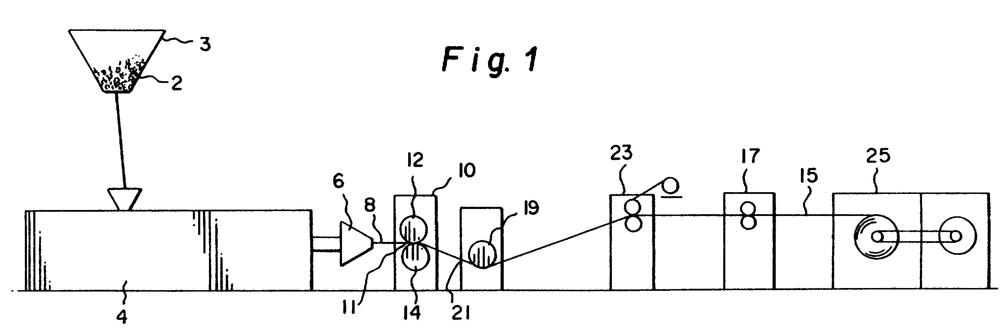

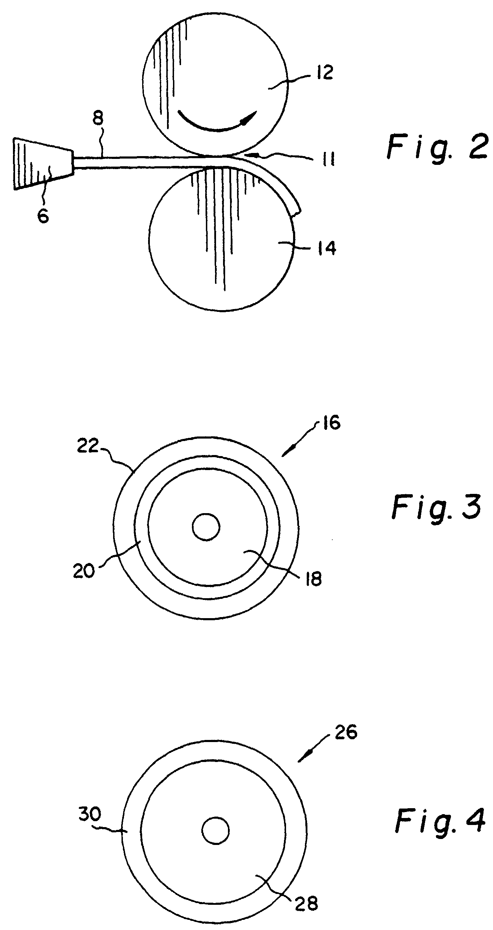

Referring to Figs. 1 and 2, extruded sheet and film of thermoplastic materials, including without limitation polycarbonate, polycarbonate blends and polycarbonate co-polymers, are conventionally produced by a method which comprises feeding thermoplastic resin 2 from a resin hopper 3 into extruder 4 which heats the resin above its glass transition temperature (T_{g}), thereby producing a viscous melt of the thermoplastic material. The terms sheet or film are used interchangeably herein, and are used to refer to thermoplastic materials having a final thickness of about 0.005 to 0.030 inches. The viscous melt is passed, under pressure provided by extruder 4, through an opening in die 6, which opening typically has the shape of an elongated rectangle or slot. The viscous melt assumes the shape of the die slot, thereby forming a continuous sheet or film of molten extrudate 8. The sheet or film of molten extrudate 8 is then passed through a finishing apparatus to form finished sheet or film articles.

A conventional finishing apparatus is a two-roll finishing or polishing stack 10, comprising an opposing upper roll 12 and lower roll 14 spaced apart by a distance that generally corresponds to the desired thickness of the finished thermoplastic sheet or film 15. Such rolls are also sometimes referred to as calendering rolls and the gap between them as the nip 11 of the finishing stack. A typical finishing stack comprises opposing upper 12 and lower 14 steel rolls which are approximately 12 to 20 inches in diameter and have a chrome plated surface with a surface roughness of about 0.05 µm. These rolls are generally cooled internally by passing a fluid through the interior of the rolls using known apparatus and methods for cooling. The temperature of the surface of the rolls can be controlled by this method. After the finished sheet or film exits from the nip 11 of the finishing stack 10, it typically enters the second nip 21 of the idler roll 19, passes through an optional masking station 23, through the pull roll 17, and is wound onto the winder 25.

The temperature of the rolls is controlled to a temperature that is below T_{g} of the thermoplastic material that is being processed. In the gap between the rolls, the surfaces of the sheet or film are abruptly vitrified via contact with the calendering rolls. Therefore, upon contact with the rolls, only the interior portion of the film remains in the thermoplastic or molten state.

Referring to Fig. 3, an improved roll 16 of the present invention may be substituted for either the upper 12 or lower 14 roll in a conventional finishing stack 10. The improved roll 16 comprises a rigid core 18, an elastomeric covering 20 attached to the outer surface of rigid core 18, and thermoplastic sleeve 22 that is detachably attached to the elastomeric covering 20. The rigid core 18 may be any material which has sufficient rigidity and other mechanical properties sufficient to form a roll that can be used to compress and size molten thermoplastics. The rigid core 18 is preferably made from steel such as is conventionally used for finishing thermoplastic materials. The elastomeric covering 20 is preferably made from silicone rubber or another heat resistant elastomer. A suitable thickness for the elastomeric covering 20 is believed to be about 0.3 to 1.0 inches, with a thickness of 0.3 to 0.5 inches being preferred. The elastomeric covering 20 may be attached to the rigid core 18 using any suitable means for attachment. The thermoplastic sleeve 22 may be any suitable thermoplastic material such as, for example, polyvinylfluoride, polyvinylidenefluoride, polychloro-trifluoroethylene and polytetrafluoroethylene (PTFE). Most preferably, the thermoplastic sleeve is a type of PTFE, such as TEFLON® (340 grade) PTFE. The thermoplastic sleeve 22 may range in thickness from about 0.020 to 0.200 inches. A thickness of 0.060 inches is preferred. The thermoplastic sleeve 22 should have a smooth outer surface with an Ra of 0.3 - 0.8 µm. For the purpose of this disclosure, the Ra value is the average height of the surface profile above and below the median line of the outer surface of the sleeve. A smoother surface on sleeve 22, will produce a smoother surface on the thermoplastic materials processed using roll 16. Conversely, a rougher sleeve 22 surface will produce a rougher finish on such thermoplastic materials. Accordingly, an Ra of less than 5 µm is preferred, and an Ra of less than 2.5 µm is particularly preferred. It is beneficial to use PTFE for sleeve 22 because it has a low coefficient of friction (COF), and low compressive strength. The COF depends on several variables, such as materials, surface finish, and temperature. In addition, in the case of PTFE, the thermal conductivity of the sleeve is in the range of 0.01 to 0.1 Btu/ft hr °F. It is believed that it is preferred that the thermal conductivity of sleeve 22 be less than 0.2 Btu/ ft hr°F.

Referring to Figure 4, another embodiment of the present invention is a roll 26 which comprises of a rigid core 28 that has a sleeve 30 applied directly over the rigid core 28. The rigid core 28 would be as described above, but the sleeve 30 would combine the functionality of the elastomeric covering 20, and the thermoplastic sleeve 22 shown in Fig. 3. The sleeve 30 would comprise an elastomer/ thermoplastic blend, a co-polymer, or possibly a composite or laminate of an elastomer and thermoplastic material.

Referring to Fig. 3, it is believed that the elastomeric cover 20 alters the overall compliance of roll 16 as compared to prior art rolls, while the thermoplastic sleeve 22 provides a compliant, durable covering for the elastomeric material that also has low surface roughness. Together, the materials of the improved roll affect the shear stress applied to extrudate as it passes through the nip 11 between the rolls. In addition, the improved roll 16 has less capacity to remove heat quickly from the extrudate which results in a higher temperature in the film as it exits the nip 11. These two factors are believed to reduce intrinsic stress/birefringence in the finished film because the film has more opportunity to recover from stress following the finishing operation.

A roll of the present invention will provide a shear stress to polycarbonate processed as described above within a range of about 150-350 psi. The birefringence of the extruded product has been observed to be directly related to this compressive shear stress such that the optical birefringence can be controlled and lowered to less than 10 nm using a roll according to the present invention. It will be understood by those skilled in the art of extrusion and annealing amorphous thermoplastics films, such as polycarbonate, that as the extrudate cools, it shrinks. Any applied stress (compressive or tensile) will inhibit the shrinkage. The extent of shrinkage depends upon the material's melt temperature, glass transition temperature and roll temperature. When the thermoplastic is cooled below T_{g}, (about 280°F. for polycarbonate), no more shrinkage is believed to occur, and thus any introduced stresses are trapped within the vitrified material. The film is extremely sensitive to deforming forces during vitrification. Even small deforming forces will lead to shear between already vitrified and still molten zones. At the boundaries between these zones, the shear stresses are thought to cause molecular orientation which may be stored in the vitrified material as intrinsic stress. A beam of light passing through such orientated regions exhibits an unacceptable optical birefringence.

### Examples

In accordance with the present invention, low birefringence, one side textured, one side polished polycarbonate films were produced using a conventional extrusion process. The overall extrusion apparatus is illustrated in Fig. 1. This conventional process employed a two-roll finishing stack 10 wherein the conventional standard chrome plated steel top roll 12 was substituted with a roll of the present invention as illustrated in Fig. 3. Specifically, the roll of the present invention comprised a rigid steel core which was about 12 inches in diameter, a silicone rubber covering that was 0.375 inches thick, and a PTFE finishing sleeve having a thickness of 0.060 inches and an Rₐ ranging from 0.3 to 0.8 µm.

In a typical example, a one-side polished, one-side textured polycarbonate film (0.005" to 0.030") was formed by extrusion using the above described apparatus. The extruded polycarbonate resin was an extrusion grade resin (LEXAN® ML9735) that had a melt flow of six (6) to nine (9) grams at ten (10) minutes at 300°C, and an average molecular weight of 25,000. However, the present invention may be used to extrude other amorphous and thermoplastic materials and is not limited to the extrusion of polycarbonate.

The melt was forced into the nip between the two (2) rolls. The gap between the rolls determined the film thickness. The thickness consistency was approximately +/- 5% for a 0.010" film. The textured films were also coated to lower the surface roughness and improve the abrasion and chemical resistance and haze resistance of the film. The coated films achieved a final haze, ASTM D 1003, of 0.1 to 0.5 % and a surface gloss of ninety-two percent (92%). This low haze allows for enhanced optical resolution. The coating was applied to the textured side and cured to produce an Ra of 3 to 10 nm. During the curing of the coating, the heat tends to further anneal the film and reduce the stress level.

In the gap or nip, the shear stress (SS) on the extrudate in the region of the upper roll may be calculated from the compressive strength (CS) of the upper roll and the coefficient of friction (COF). SS = CS * COF. The compressive strength is measured for a 0.001" offset. As shown in Table 1, the SS for PTFE is about 150-350 psi, and the SS for the silicone rubber roll is about 600 - 1600 psi. In turn, the SS for the chrome roll is greater than 60,000 psi.

**Table 1 -**

| Physical and Thermal Properties of Roll Materials | | | |
|---|---|---|---|
| Property | Material | | |
| | PTFE | Silicone Rubber | Chrome |
| Density (Lb/ft³) | 134 | 109 | 493 |
| Tensile Modulus (psi) | 50,000 | 700-900 | 12,000,000 |
| Compressive Stress (psi) | 1700 | 1000-2000 | 90,000 |
| k (Btu/ft hr °F) | 0.14 | 0.02 | 21.3 |
| COF / polish steel | 0.1-0.2 | 0.6-0.8 | 0.7-1.0 |

Because shear stress is stored in the film as residual stress which produces birefringence, the lower shear stress which results with the PTFE sleeve is a significant advantage because it results in low birefringence thermoplastic films. Therefore, it is generally desirable that the material used for the outer sleeve have a low COF.

An optical media substrate (coated film) requires the combination of low birefringence (less than 25 nm), high gloss (low surface roughness) and high clarity, as measured by % haze. For an optical media substrate, the % haze must be 0.1 (max) to avoid scattering the laser. A low % Haze in a coated film is best obtained using an uncoated film having a gloss of from 85-100%. The uncoated film gloss is inversely proportional to the film surface roughness. The gloss is strongly effected by the shear stress (SS=CS *COF) on the roll material. Only the PTFE material met these requirements, as is clearly illustrated in Table 2.

Referring again to Fig. 1, the comparative data in Table 2 include the process conditions and resultant film characteristics for a typical polycarbonate film having a thickness of 0.010 inches made using three different upper rolls 12 in a two-roll finishing stack as described herein. The silicone rubber and chrome rolls 12 listed in Table 2 are prior art. The PTFE roll refers to a roll of the present invention comprising a rigid steel core which was about 12 inches in diameter, a silicone rubber covering that was 0.375 inches thick and a PTFE finishing sleeve having a thickness of 0.060 inches and an Rₐ ranging from 0.3 to 0.8 µm. The lower roll 14 in all runs was a standard chrome plated roll. The pull roll 17 is the take-up mechanism for the thermoplastic film. The pull roll 17 is characterized herein by the power used to drive the motor, which is directly related to the amperage setting of the roll. As the amperage increases, so do the tension forces placed on the film. The data listed below in Table 2 were collected for several runs wherein the melt temperature of the material exiting the extruder ranged from about 536 -597 °F, the screw in the extruder was operated in the range of about 20-63 RPM, the line speed ranged from 19.5-29 feet per minute, and the temperature of the idler roll 19 ranged from 260-300 °F.

**Table 2**

| Film Property | Top Roller Material | | | | | | |
|---|---|---|---|---|---|---|---|
| | PTFE | PTFE | PTFE | PTFE | PTFE | Silicone Rubber | Chrome |
| Birefringence (nm) | 80-100 | 10-25 | 10-25 | 0-5 | 0-10 | 150-200 | 700-900 |
| Ra (µm) | 0.3-0.8 | 0.4-0.7 | 0.4-0.7 | 0.4-0.7 | 0.4-0.7 | 4-5 | 0.05 |
| Pull Roll (amps) | 8 | 4 | 3 | 2 | 2 | 2 | 4 |
| Top Roller Temp.(°F) | 89 | 94 | 92 | 90 | 95 | 100 | 225 |
| Bottom Roll Temp.(°F) | 290 | 157 | 180 | 180 | 160 | 245 | 220 |
| Lot No. | SOJ518 | SOL002 | SOU782 | SOU567 | SOX882 | SOE049 | SOJ944 |
| 85% Gloss Uncoated Film | 100-110 | 91-96 | 75-85 | 80-90 | 80-90 | 5-10 | 85-100 |
| % Haze Coated Film | 0.1-0.2 | 0.0-0.1 | 0.0-0.1 | 0.0-0.1 | 0.0-0.1 | >2.0 | 0.0-0.1 |

The data shown in Table 2 illustrate that a roll of the present invention may be used to produce thermoplastic films having low birefringence and low surface roughness. It is further shown that the temperature of the steel bottom roll 14 and the force applied by the pull roll 17, which is directly related to the amperage of the motor used to drive the roll, also affect the birefringence of the resulting film. Applicants have determined that this affect is primarily dependent upon whether the film has cooled below T_{g} before it exits the nip 11. It is particularly important that the surface of the film that is in contact with the standard steel roll has cooled below T_{g}. Otherwise, the film continues to be oriented, and will store internal stresses from the forces exerted by the pull roll 17, or the idler roll 19.

In operation of the invention, the bottom surface of the film (i.e., the surface that contacts the bottom roll) is cooled to below T_{g}, while the top surface (i.e., the one that contacts the top roll), and the predominant part of the interior region of the film, are maintained in the thermoplastic state. Small deforming forces may lead to shear between these already vitrified, and still molten zones. At the boundaries between these zones, the shear causes molecular orientation. When a beam of light passes through such oriented regions, birefringence occurs. Therefore, to make a low birefringence film, shear must be avoided. The roll according to the present invention helps avoid shear.

The coated film for optical media applications prepared by the process described herein is also advantageous because it exhibits enhanced compatibility with die cutting. This property is valued by customers who desire to efficiently die cut CD-ROMs immediately (see U.S. Patent No. 4,836,874), rather than waiting for the structure to cool and shrink. The improved die-cutting properties of this film are due to its low birefringence, which imparts thermal stability and helps focus the laser pick-up beam.

A conventional CD player uses a laser pick-up beam to read data from a CD-Rom disk at a rate of 4 million bits per/second. To assist the pick-up in its difficult task, electro-mechanical circuits are used to focus the beam and keep it on track. The substrate must exhibit excellent thermal stability to maintain a focused beam.

In addition, the films of the present invention are particularly well suited for any end use requiring low shrinkage (less than 0.1% at 280°F). After thermal cycling, (e.g., operations such as printing, die cutting, and injection molding), high shrinkage films can yield unacceptable results. The films made in accordance with the invention which have a birefringence of less than twenty-five (25) nm can avoid such problems typically encountered with conventional, high shrinkage films. As illustrated in Table 2, the uncoated films made using the rolls of the present invention exhibited low birefringence.

Although the present invention has been described in detail, it should be understood that various modifications, substitutions, or alterations can be made without departing from the intended scope as defined by the appended claims.

## Claims

1. An improved finishing roll for providing a thermoplastic sheet or film having a smooth surface and reduced internal stresses, said finishing roll comprising:
a) a rigid core; and
b) a thermoplastic outer layer.

2. A finishing roll according to claim 1 wherein said rigid core is metallic.

3. A finishing roll according to claim 1, wherein said thermoplastic outer layer is polytetrafluoroethylene.

4. A finishing roll according to claim 1, wherein said thermoplastic layer ranges in thickness from about 0.020 to 0.200 inches.

5. A finishing roll according to claim 1, wherein said thermoplastic layer has an average surface roughness of less than 0.8 microns.

6. A finishing roll according to claim 1, wherein said thermoplastic layer is adapted to provide a compressive shear stress during the extrusion of said thermoplastic sheet or film in the range of approximately 150 - 350 psi.

7. A finishing roll according to claim 1, wherein said thermoplastic layer has a thermal conductivity ranging from about 0.1 to 0.2 Btu/ft hr°F.

8. A finishing roll according to claim 1, further comprising a resilient intermediate layer interposed between said core and said outer layer.

9. A finishing roll according to claim 8, wherein said resilient middle layer is elastomeric.

10. A finishing roll sleeve said sleeve is comprised of a thermoplastic layer having an average surface roughness of less than 0.8 microns.

11. An improved finishing apparatus capable of providing smooth upper and lower surfaces to a thermoplastic sheet, said apparatus comprising:
a) a bottom roll for polishing the lower surface of said sheet; and
b) a top roll for texturing the upper surface of said sheet.

12. An apparatus according to claim 11, wherein said bottom roll is chrome-plated steel.

13. An apparatus according to claim 11, wherein said top roll comprises:
a) a rigid core;
b) a resilient middle layer; and
c) a smooth, thermoplastic outer layer.

14. An improved finishing apparatus capable of providing smooth upper and lower surfaces to a thermoplastic sheet, said apparatus comprising:
a) a top roll for polishing the upper surface of sheet; and
b) a bottom roll for texturing the lower surface of said sheet.
